# EUROPEAN PATENT APPLICATION

(11) **EP 1 887 268 A1**
(43) Date of publication of application: **13.02.2008**
(21) Application number: 07075658.0
(22) Date of filing: 01.08.2007
(51) Int. Cl.: F16L 3/14, E21F 17/02, F16L 3/123

(54) **Perforated strip**

(30) Priority: 11.08.2006 NL 1032312
(71) Applicant: J. van Walraven Holding B.V., 3641 RK Mijdrecht (NL)
(72) Inventor: van Walraven, Jan, 3641 GP Mijdrecht (NL)
(74) Representative: Houben, Christiaan Hein Willem Frans

(57) **Abstract**

A metal strip (13) for attaching objects, such as for example tubes, to a ceiling, is provided on at least one side with a layer (11) made of elastomer, plastic or rubber material. The metal strip (13) is provided with a pattern of holes (3,5) in the longitudinal direction of the strip (13) for allowing a male securing member (4) to pass through. The holes (3,5) in the metal strip are filled with the elastomer, plastic or rubber material. Said material in the holes is provided with an aperture (6) for allowing the male securing member (4) to pass through. The aperture (6) which has been provided is smaller than the diameter of the shank (14) of the male securing member (4), as a result of which the material in the hole (3,5) can engage in a clamping manner with the male securing element (4) and hold the latter securely.

## Description

The invention relates to a metal strip perforated in the longitudinal direction by a number of holes at a more or less regular distance apart, which is provided on at least one of its sides with an elastomer, plastic or rubber coating, which strip is used for attaching a pipe to a wall, ceiling or other support. The strip can be cut to any desired length. In addition to pipes, it is also possible to attach other objects with it, such as ducts, apparatus and the like.

A perforated strip of this type is known from GB 1 173 913. In one of the embodiments described in this publication, the metal strip is perforated with holes before the rubber, plastic or elastomer coating is applied. Although GB 1 173 913 allows for the possibility of applying the coating to a non-perforated strip and only then perforating the strip, i.e. after the rubber, plastic or elastomer coating has been applied, this will rarely be carried out in practice, as perforating the strip afterwards virtually always results in undesirable damage to the coating due to the great pressure which is required when perforating metal.

With the known strip, the coating in the central holes, which serve as passages for screws, is removed by perforation after the coating has been applied, as a result of which these holes are made accessible. Thereafter, the strip is cut to a desired length and, for example, bent around a tube. The end of the strip which is remote from the tube is attached to the ceiling or wall or other support in some way. At the end which is arranged around the tube, two holes are positioned opposite one another, through which a securing means, for example a screw and a nut, are passed which holds the two strip sections together. As a result thereof, the tube is retained in the strip which is formed into a loop.

It is an object of the invention to provide a perforated strip which is relatively easy to use.

This object is achieved according to the invention by a strip according to claim 1.

According to the invention, said material in the holes is provided with an aperture for allowing the male securing member to pass through, in which the aperture is smaller than the diameter of the shank of the screw. The central holes in the metal strip are not opened up completely, as a result of which the elastomer, plastic or rubber material which is in the hole is forced out by a male securing element, such as a screw, when the latter is introduced into the hole. Due to its flexibility, the coating material will engage with the male securing element in a clamping manner and hold it securely. As a result thereof, the fitter has his hands free to fit the installation strip around a pipe or the like, in such a manner that the male securing element can be introduced into a hole in the opposite part of the strip. The male securing element is then pressed into the second hole. In this hole as well, the coating will clamp around the male securing element. As a result, it is easy for the fitter to secure the male securing element to the strip. In many cases, a screw is used as male securing element, which screw is provided with a male threaded connection and the screw is secured to the strip by screwing a female securing element, for example a nut, onto the screw, the thread of which female securing element is complementary to that of the male securing element.

In a preferred embodiment, at the securing holes, the coating is provided with two intersecting incisions which preferably extend at right angles to one another.

The invention will be explained in more detail below with reference to the drawing, in which:
Fig. 1 shows a perspective view of the use of a perforated strip for suspending a tube,
Fig. 2 shows a perspective view of a section of the perforated strip in an unbent state,
Fig. 3 shows a cross section of the perforated strip at a perforation with a securing screw fitted therein,
Fig. 4 shows a top view of a section of the perforated strip in the unbent state,
Fig. 5 also shows a top view of a section of the perforated metal strip, but before the coating of elastomer material, plastic or rubber has been applied,
Fig. 6 shows a detail of a portion, denoted by A in Fig. 5, with a perforated hole with a cut coating, and
Fig. 7 shows a cross section of the perforated strip.

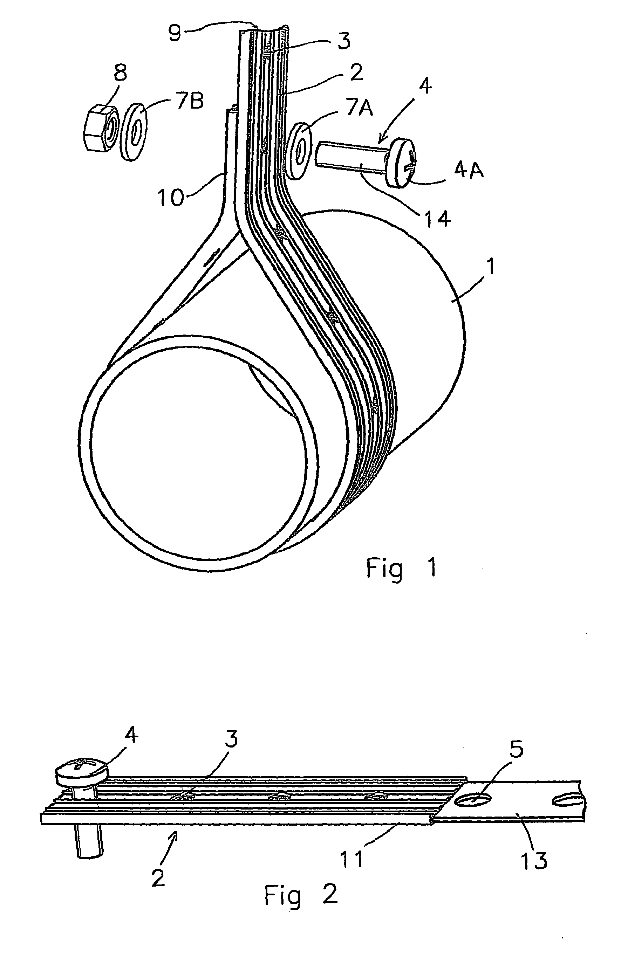

Fig. 1 shows how a perforated strip 2 is fitted around a tube 1 in order to attach this tube to a ceiling or wall. An end 9 of the strip 2, which end 9 is furthest from the tube, is fastened in a manner which is not described in any more detail to a ceiling or wall or another support. The other end 10 of the strip 2 is arranged around the tube 1 in such a manner that two perforated holes 3 are situated opposite one another above the tube 1. Thereupon, a screw 4 can be introduced through both holes after which a nut 8 can be placed on the end of the screw 4 and tightened. As a result, the tube 1 is retained in the loop of the perforated strip 2. As can be seen in Fig. 1, it is also possible to fit a retaining ring 7A between the head 4A of the screw 4 and the perforated strip 2, but this is not obligatory. The same applies to the retaining ring 7B between the strip 2 and the nut 8.

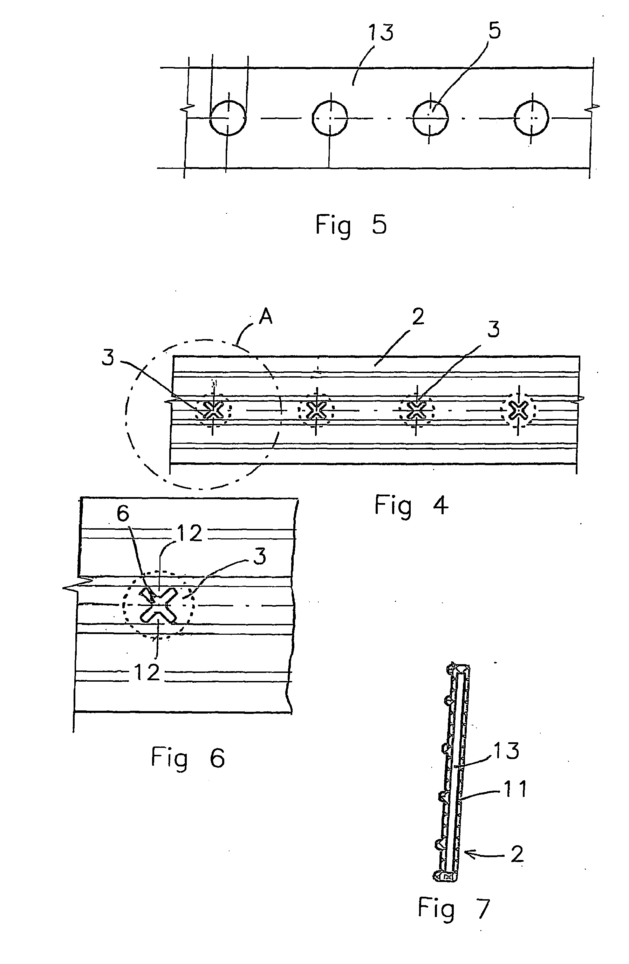

As can be seen in Fig. 2 and Fig. 7, the metal core 13 of the perforated strip 2 is provided with an elastomer, plastic or rubber layer 11. The metal core 13 may be made of, for example, steel, optionally provided with a zinc layer or aluminium, but other types of metal are also possible, such as stainless steel or the like. The metal core can be completely embedded in the layer of elastomer, plastic or rubber, but it is also conceivable that the coating layer is present on only one side of the metal core 13.

It is known from GB 1 173 913 to remove the elastomer, plastic or rubber, which flows into the holes during the application process, from this elastomer, plastic or rubber layer at the holes 5 in the metal core produced by perforation in a final treatment. As a result thereof, screw 4 can be introduced into the hole 3. With this known strip, the diameter of the cleared holes then is such that the shank 14 of screw 4 can pass through without resistance. In practice, this is usually a diameter of 6 - 8 mm, but smaller or larger holes are also conceivable.

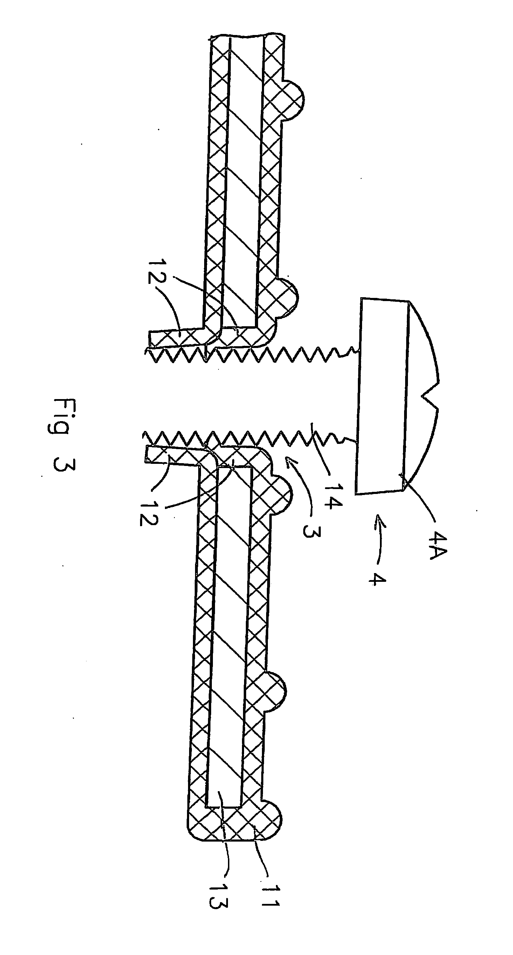

In contrast to the strip known from GB 1 173 913, the present invention does not completely clear this hole of the elastomer, plastic or rubber which has flowed into it during the coating process. Instead, the elastomer, plastic or rubber, which has flowed into the hole, is provided with a cruciform incision 6, as can be seen in Fig. 6. When screw 4 is then introduced in the hole, the substantially triangular parts 12, which are adjacent to the cruciform incision 6, will bend in the direction of the screw end which is opposite the screw head 4, as can be seen in Fig. 3. The parts 12 clamp around the shank 14 of the screw, as a result of which the screw 4 is kept in place and the fitter has his hands free to carry out the remainder of the securing procedure. In practice, the fitter will already introduce a screw 4 into a hole 3 near the end 10 of the cut perforated strip. If desired, the retaining ring 7A is first placed on the screw 4. The screw 4 is now held securely by the parts 12 in the hole 3. The perforated strip 2 can now be fitted around the component to be secured, for example the tube 1, together with the screw 4, in such a manner that a second hole 3 comes to lie opposite the hole 3 into which the screw 4 has already been fitted. By now pressing the screw 4 through this second hole 3, the parts 12 of this second hole 3 will also clamp around the shank 14 of screw 4. The screw 4 will now also be retained in the second hole 3. Thus, the fitter has his hands free to fit the nut 8 and, if desired, the retaining ring 7B. By tightening the nut, the two parts of the strip 2 are securely connected to one another. It will be clear that the cruciform shape of the incision is only a preferred embodiment and that the incision may have many other shapes which lead to the same result. It is even possible to provide only a round hole, which is substantially smaller than the diameter of the shank 14 of screw 4. The main concern is that the opening is sufficiently large to press the screw 4 through the hole with some force wile deforming the coating material which is still present in the hole, but is also sufficiently small to clamp around the shank 14 of screw 4 with sufficient force to be able to hold the latter securely.

The distance between the holes 3, 5 in the strip usually forms a regular pattern, but that is not strictly necessary for this application and the mutual distance may also vary. In this example, the distance is 25 mm, but a smaller or larger distance is possible. The choice of the mutual distance is determined, on the one hand, by the desired tensile strength of the perforated strip and the desired ease of use, on the other hand.

## Claims

1. Metal strip (13) which is provided on at least one side with a layer (11) made of elastomer, plastic or rubber material, in which the metal strip (13) is provided with a pattern of holes (3, 5) in the longitudinal direction of the strip for allowing a male securing member (4) to pass through, which holes (3, 5) in the metal strip (13) are filled with the elastomer, plastic or rubber material, **characterized in that** said material in the holes (3, 5) is provided with an aperture (6) for allowing the male securing member (4) to pass through, in which the aperture (6) is smaller than the diameter of the shank (14) of the male securing member (4).

2. Metal strip according to claim 1, in which the aperture has the shape of two intersecting incisions (6).

3. Metal strip according to claim 2, in which the incisions (6) extend at right angles to one another.
